# NEUE EUROPÄISCHE PATENTSCHRIFT

(11) **EP 2 953 913 B2**
(45) Veröffentlichungstag und Bekanntmachung des Hinweises auf die Entscheidung über den Einspruch: **06.11.2019**
(45) Hinweis auf die Patenterteilung: 07.12.2016
(21) Anmeldenummer: 14705707.9
(22) Anmeldetag: 06.02.2014
(51) Int. Cl.: C04B 28/02, C04B 28/04, C04B 28/18, C04B 28/24, C04B 28/30, C04B 28/34, C04B 40/06

(54) **VERWENDUNG NACH EINEM SPEZIELLEN TESTVERFAHREN DEFINIERBARER TROCKENMÖRTEL**
USE OF A DRY MORTAR WHICH CAN BE DEFINED ACCORDING TO A SPECIAL TESTING METHOD
L'UTILISATION D'UN MORTIER SEC DÉFINISSABLE PAR UNE MÉTHODE SPÉCIALE

(30) Priorität: 08.02.2013 DE 102013002270
(43) Veröffentlichungstag der Anmeldung: 16.12.2015
(73) Patentinhaber: Saint-Gobain Weber GmbH, 40549 Düsseldorf (DE)
(72) Erfinder: REISCH, Bruno, 79098 Freiburg (DE); BECKER, Matthias, 79379 Müllheim (DE)
(74) Vertreter: Börjes-Pestalozza, Henrich
(86) Internationale Anmeldenummer: PCT/EP2014/000315
(87) Internationale Veröffentlichungsnummer: WO 2014/121930

(56) Entgegenhaltungen:
- EP-A1- 0 760 352
- WO-A1-2009/037218
- DE-A1-102006 060 356
- DE-B4- 10 351 259
- DE-B4- 10 351 259
- DE-U1-202004 005 376
- Schreiben der alsecco GmbH & Co. KG vom 6. November 2006, samt Stoffdatenblatt "Armatop Uni"
- Schreiben der alsecco GmbH & Co. KG vom 4. Oktober 2012, samt Stoffdatenblatt "Capatect Klebe- und Spachtelmasse 186M"
- Algemeine bauaufsichtliche Zulassung des Deutschen Institut für Baustofftechnik für das Produkt "Alprotect Nova" (ETA 09/0278)
- Technisches Informationsblatt "Quarzsand WF 13"
- Sicherheitsdatenblatt "Quarzsand"
- Produktdatenblatt "Kalksteinmehl KMV90"
- Technisches Informationsblatt "Saxogran"
- Eidesstattliche Versicherung des Herrn Dr. Hermann Josef Slolz
- ETA-Verzeichnis des Deutschen Instituts für Baustofftechnik
- Prüfbericht Nr. Q-02017-350-020 der Dr. Robert-Murjahn-Institut GmbH
- EN 1015-18
- EN 1015-3
- EN 998-1 in der Fassung vom Dezember 2012
- DIN V 18550
- Kopie vom 30.01.2018 aus der Homepage der Zeitschrift "Malerblatt Wissen" mit Kopien der Fachbegriffe Deckputz, Oberputz und Außenputz
- DIN EN 13279-1 vom November 2008
- Kopie eines nicht ausgefüllten Stoffdatenblattes des DIBt (Kopie vom 06.02.2018)
- Produktdatenblatt der alsecco PD 0041/0816/004 für Armatop Uni
- "Technische Information Nr. 135" (vom August 2016) zu Capatect Mineral-Leichtputzen R und K
- "Technische Information Nr. 186" der Caparol (vom September 2017) zum Unterputz Capatect Klebe- und Armierungsmasse 186 M
- Aktuelle Normung Putzmörtel Stand 10.2015
- Laborbericht vom 19.11.2018
- Firmenbroschüre "Beschichtung-Systeme für hochwärmedämmende Mauerwerke"

## Beschreibung

Die Erfindung betrifft die Verwendung einer mineralischen Mischung (Trockenmörtel) zur Herstellung eines einen Mikroorganismenbefall vermindernden oder behindernden Deckputzes, wobei die mit Zugabewasser angemachte Mischung auf eine darunter liegende Schicht eines Wärmeverbundsystems aufgebracht und härten gelassen wird, und wobei die mineralische Mischung in Form eines Trockenmörtels für wasserabweisende Deckputze (Mineralputze) vorliegt, welche neben einem mineralischen Bindemittel und mineralischer Gesteinskörnung zwei Hydrophobierungsmittel beinhaltet, jeweils gemäß den Ansprüchen und wie nachstehend definiert.

Für aktuelle verputze Außenwände werden heute oft sogenannte Wärmedämm-Verbundsysteme (WDVS) vorgesehen, bei denen Schichten untereinander und mit dem Untergrundmaterial dauerhaft verbunden und eng aufeinander abgestimmt sind.

Im Prinzip bestehen diese Verbundsysteme aus mehreren Komponenten in (von der Untergrund- zur Außenseite) folgender Reihenfolge: Kleber (z.B. Klebemörtel) - Dämmmaterial - Armierungsschicht - Armierungsgewebe - Voranstrich - Ober( oder Deck)-putz (oft in Form eines z.B. 1 bis 4 mm dicken Dünnschichtputzes oder eines z.B. 10 bis 15 mm dicken Dickschichtputzes). Wegen der engen Verzahnung sollten alle Komponenten eine große Dauerhaftigkeit aufweisen, um sie möglichst selten ersetzen zu müssen.

Ein Problem besteht darin, dass bei langwieriger Einwirkung der Witterungsbedingungen , denen der Deckputz ausgesetzt ist, dieser von Mikroorganismen (wie Algen, Pilze oder Flechten) befallen wird.

Um dies zu vermeiden, wurden verschiedene Lösungsansätze verfolgt.

Deck- oder Außenputze dienen dazu, die Einflüsse der Witterung (Schlagregen, Frost usw.) von der übrigen Wandkonstruktion fernzuhalten. In den Putznormen EN 998-1 und DIN V 18550 werden deshalb Anforderungen an die Putzsysteme gestellt, um die Tauwasser- und (Schlag-)regensicherheit zu gewährleisten. Diese Anforderungen einzuhalten gelingt in der Regel nur durch hydrophobierte Putze. Die Trockenmörtel beinhalten zu diesem Zweck Hydrophobierungsmittel, deren Aufgabe es u.a. ist, die Benetzung der Porenwandungen im Bindemittelstein zu vermindern. Die Hydrophobierungsmittel werden in feinstverteilter Form in die Bindemittelmatrix eingebettet und wirken dort wasserabweisend.

In EN 998-1 werden die Putze nach ihren Grenzwerten für Wasserabweisung in 3 Klassen eingeteilt:

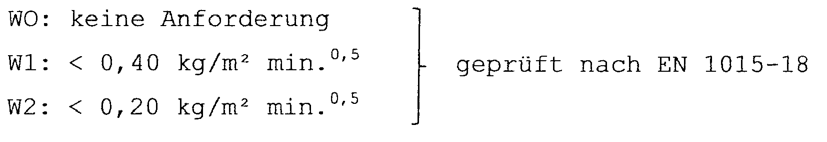

In Deutschland gilt zusätzlich die Anforderung nach DIN V 18550. Sie legt für wasserabweisende Putze als Grenzwert fest: Wasseraufnahme <0,5 kg/m² min.^{0,5}, geprüft nach DIN 18550 in Anlehnung an DIN EN ISO 15148.

In der Praxis werden oftmals Salze der Fettsäuren (Natriumoleat und Calcium- oder Zinkstearat) eingesetzt, deren wasserabweisende Wirkung auf ihrem amphiphilen Molekülcharakter beruht: Die Verbindungen bestehen aus einem hydrophoben, unpolaren Kohlenwasserstoffrest und einer hydrophilen, polaren Endgruppe (Metallkation). Wird ein solches Hydrophobierungsmittel durch Zugabewasser dispergiert oder gelöst, so wird der polare, hydrophile Kopf des Moleküls durch die feuchte Grenzfläche (Wasserfilm) hindurch an das Mineral angezogen und angelagert, während der unpolare, hydrophobe Schwanz des Moleküls nach außen ragt und eindringendes Wasser abstößt. So wird eine gut haftende und feuchtigkeitsabweisende Schutzschicht ausgebildet.

Im Falle des ebenfalls häufig verwendeten Natriumoleats beruht die Hydrophobierungswirkung auf der zeitverzögerten Bildung von Calciumseifen mit alkalischen Bestandteilen der Baustoffe. Natriumoleat und Calciumstearat werden überwiegend aus nachwachsenden Rohstoffen (pflanzliche und tierische Fette und Öle) hergestellt.

Neben den Metallseifen werden auch Hydrophobierungsmittel auf Silikonharzbasis verwendet.

Aus dem deutschen Patent DE 103 51 259 B4 sind für den Deckputz Materialien bekannt, die wassersaugende Komponenten beinhalten, um so eine Wasseraufnahme nach DIN 52617 (entspricht dem Verfahren nach DIN 18550) von größer als 0,5 und kleiner oder gleich 1,5 kg/m²h^{0.5} aufweisen, welche durch die wasseraufsaugende Komponente trotz gleichzeitiger Anwesenheit von mindestens einem Hydrophobierungsmittel erzielt wird.

Ziel der dortigen Technologie war, eine Aufnahme von Wasser zu ermöglichen, damit Tau- und Schlag- (z.B. Regen-) Wasser nicht an der Oberfläche verbleiben und dort ein feuchtes Milieu aufrechterhalten, das sonst für Mikroorganismen geeignete Wachstumsbedingungen zur Verfügung stellen würde.

Das Ziel wurde laut dortiger Darstellung erreicht durch Mischungen wie oben eingangs definiert, die einen saugfähigen Zuschlagstoff beinhalten, um die im vorletzten Absatz genannte Wasseraufnahme zu erzielen und andererseits an der Oberfläche in Folge der Hydrophobisierung ein Ablaufen von Schlagwasser (und Tauwasser bei größeren Mengen) zu ermöglichen und so die Oberfläche möglichst trocken zu halten. Das sollte das Mikroorganismenwachstum wirksam verhindern helfen.

Doch erfüllt das Produkt nach DE 103 51 259 B4 nicht die Norm EN 998-1 für wasserabweisende Außenputze.

Es wurde nun gefunden, dass hohe Wasseraufnahmen wie die genannten nicht stets eine ausreichende Hemmung des Wachstums von Mikroorganismen zur Folge haben.

So bleibt es ein Ziel, noch weiter verbesserte Trockenmischungen und resultierende Putze zur Verfügung zu stellen, welche einen noch größeren negativen Einfluss auf das Wachstum von Mikroorganismen haben.

Die Erfindung basiert daher allgemein auf der erfindungsgemäßen Verwendung einer eingangs genannte mineralische Mischung für wasserabweisende Deckputze (für Wärmedämm-Verbundsysteme, welche dadurch gekennzeichnet ist, dass sie mindestens ein UV-unbeständiges und mindestens ein UV-beständiges Hydrophobierungsmittel beinhaltet und bei Austrocknung nach einem unten näher beschriebenen verwendbaren Testverfahren so schnell verläuft, dass bei Trocknung am Ende eines Trockenschrittes ein Feuchtegehalt (Wassergehalt) von 200 g/m² oder darunter erreicht wird und am Endpunkt eines Benetzungsschrittes mit Wasser ein Feuchtegehalt von 350 g/m² oder darüber erreicht wird, wie durch Anspruch 1 definiert.

Detaillierte Beschreibung des bevorzugten verwendbaren Testverfahrens zur Ermittlung der Feuchte-(= Wasser-)gehaltparameter:
Bei jedem Testzyklus (Dauer 7 Tage) werden auf ein hydrophobes Dämmmaterial (Polystyrolplatte, 29 x 23 cm, 4 cm dick), ein Haftmörtel und dann ein Deckputz (Edelputz) aus einem angefeuchteten (insbesondere erfindungsgemäß verwendbaren) Trockenmörtel wie z.B. nachfolgend (beispielsweise in den Beispielen) beschrieben aufgebracht, die Korngröße liegt bei 2 - 3 mm. Die so erhaltenen Prüfkörper-Platten werden am Randbereich mit Paraffin (auf 1,5 cm Breite) abgedichtet, 5 Tage vor Start des ersten Messzyklus unter dem Messklima (20°C / 65% relative Luftfeuchte) stabilisiert und jeweils in 2 l (jeweils für jeden Ansatz frisches) Wasser in einer Plastikwanne bei 20°C mit der Deckputzschicht nach unten eingelegt, was maximale Benetzung simuliert (Benetzungsschritt), und verbleiben dort für 6 Stunden. Dann werden sie 18 Stunden auf einem Rostregal in einer Klimakammer getrocknet (Trockenschritt), dieser 6 plus 18 Stunden-Vorgang (Messzyklus) wird viermal wiederholt und die Platten dann 72 Stunden getrocknet (Ende des ersten Testzyklus). Vor jeder Wägung wird Oberflächenwasser abgetupft.

Die Trocknung erfolgt bei 20°C/ 65% relativer Luftfeuchte. Je Messreihe werden mehrere Testzyklen bis zur ungefähren Zyklenkonstanz (Abweichen der maximalen Wassergehalte in g/m² voneinander um nicht mehr als ± 25 %, wie auch der minimalen Wassergehalte voneinander um nicht mehr als ± 25 %; vorzugsweise jeweils um nicht mehr als ± 15 %, jeweils vom Mittelwert der Messungen je Testzyklus) aufgenommen.

Bei der Herstellung der Prüfkörper werden vorteilhaft alle Massen (Dämmplatten, Beschichtungen, Wachs, Feuchten) festgehalten.

Die Auswertung erfolgt mittels Vergleich der Wasser-Aufnahme und -Abgabe in g/m² (ermittelt aus dem Gewichtsunterschied gegenüber dem getrockneten Putz vor Einbringen in Wasser ermittelten) unterschiedlicher Materialien über einen bzw. mehrere Mess- und insbesondere Testzyklen.

Unter diesen Bedingungen zeigt ein üblicher, für Mikroorganismenbefall anfälliger Putz eine Wasseraufnahme bis 1400 g/m², beim Austrocknen geht er herunter bis auf 600 bis 800 g, übers Wochenende (allgemeiner ausgedrückt bei 72 Stunden Trocknung) bis ca. 400g.

Eine Überprüfung, dass innerhalb der genannten Grenzen des Wassergehalts tatsächlich eine Verminderung des Algen- und Pilzbefalls stattfindet, ist mittels folgender Versuche möglich bzw. in den Beispielen erfolgt:
Platten (siehe Beispiele) mit Putz werden in jeweils vier Prüfkörper der Größe 14,0 cm x 14,0 cm zerteilt. Zwei der Prüfkörper bleiben unbehandelt, zwei werden wie folgt vorkonditioniert zum Erreichen eines "algenfreundlichen" pH-Wertes von 8,5, höhere pH-Werte hemmen das Wachstum von Algen: Ein Auswaschtest zur Ermittlung des Oberflächen-pH-Wertes in Abhängigkeit von der Niederschlagsbelastung wird durchgeführt.

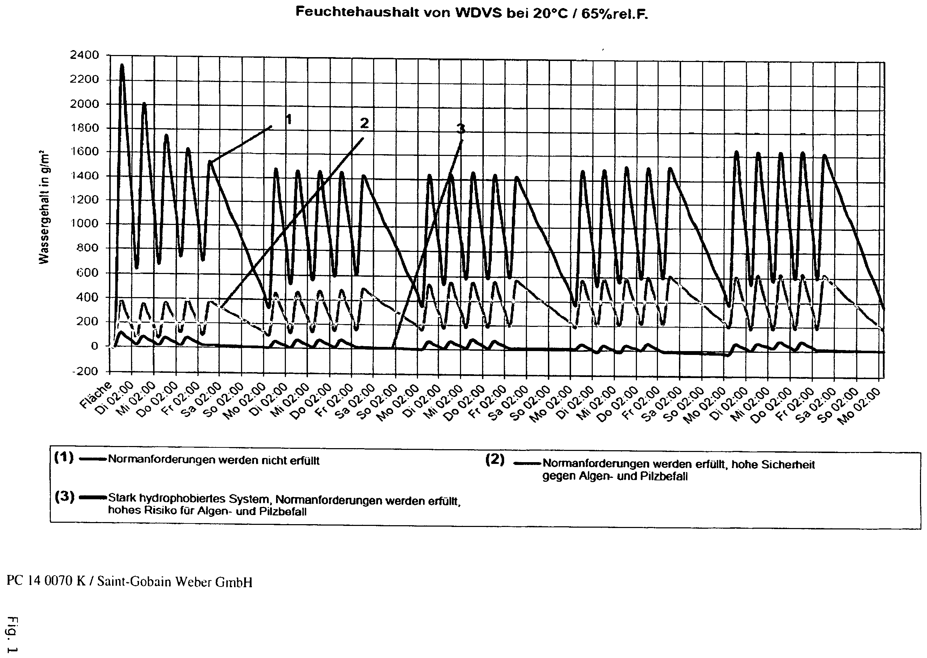

Die zu behandelnden Prüfkörper werden auf einem Beregnungsgestell mit einem Volumenstrom von 75 l/min x m² von Wasser mit pH 7 schräg gelagert (bei einer angenommenen Auswaschleistung von 1000 l/m² entsprechen 15 min Auswaschung ungefähr 12 Monaten Regen, also einer Standzeit von einem Jahr). Nach 15 min Auswaschung werden die Proben für 30 min bei 40 °C im Trockenschrank aufbewahrt. Die Zyklen werden wiederholt, bis ein pH von 9,0 erreicht wird (im Beispiel für Kurve 2 in Fig. 1 waren hierzu beispielsweise 7 Auswaschungszyklen erforderlich). Nach anschließender Trocknung über 24 Stunden bei 40 °C betrug der Oberflächen-pH-Wert 8,5 beim Beispiel aus Kurve 2 und lag damit knapp oberhalb des algenfreundlichen Bereichs, d.h. die Algenbesiedelung wird zumindest noch behindert.

Vorkonditionierte und unkonditionierte (nicht mit Wasser ausgewaschene Probe mit höherem Oberflächen-pH) werden dann wie folgt auf ihre Empfindlichkeit bzw. Unempfindlichkeit für Algenbefall geprüft:
Die Überprüfung der algistatischen Ausstattung erfolgte auf einer unbehandelten und einer vorkonditionierten Putzprobe. Die Inkubation (in einem Klimaschrank Rumed 340, Rubarth Apparate GmbH, Laatzen, Deutschland) wurde in den vorliegenden Experimenten unter Verwendung der Grünalge *Stichococcus sp.* (Stamm ROS 55/3, Universität Rostock) durchgeführt. Die Versuchsbedingungen entsprachen Nordseitenbedingungen (PAR (Photosyntetisch Aktive Strahlung) 20 µmol Photonen/m²s, UVA 0,2 mW/cm² (Repti-Glo 2.0 Lampen, RC Hagen Deutschland GmbH ("Exo Terra"), Holm, Deutschland), Tagesgang 16 h hell, 8 h dunkel, 18 °C). Die Inkubation lief über 35 Tage. Während der Inkubation wurden die Grünalgen auf den Prüflingen regelmäßig mit verdünntem Modified Bold's Basalmedium beregnet. Es folgte eine visuelle Begutachtung des Algenbewuchses und eine Quantifizierung der Zellzahlen mittels Epifluoreszenzmikroskopie unter Ausnutzung der Eigenfluoreszenz des Chlorophylls bei Blauanregung, wobei die Mittelwerte aus 30 Einzelmessungen je Probe berechnet wurden. Als Maß für eine ausreichende algistatische Wirkung sollte eine Vorgabe von 200.000 Zellen/cm² unterschritten werden.

Die Überprüfung auf Resistenz gegen Schimmelbefall wurde unter Verwendung fassadenbürtiger Schimmelpilze der Gattungen *Cladosporium, Chaetomium* und *Aspergillus (A. fumigatus* und *A. niger)* durchgeführt (z.B. isoliert von einer Putzfassade, geführt in der Stammsammlung der Universität Rostock). Vor Versuchsbeginn wurden frische Pilzkulturen angelegt und geerntet. Die geernteten Sporen wurden mit einer Malzextrakt-Bouillon versetzt. Diese Sporensuspension wurde mittels Pipette auf die Prüfkörper übertragen (10 ml Sporensuspension je Probe, Nährmedium bestehend aus Malzextraktbouillon. Die Inkubation lief insgesamt über 41 Tage, in denen die Proben 5 Wochen einer Hellphase von 16 h und einer Dunkelphase von 8 h bei einer Temperatur von 18 °C ausgesetzt waren und anschließend eine weitere Woche bei 26 °C inkubiert wurden. Die Proben wurden alle zwei Tage mit Leitungswasser und einmal wöchentlich mit verdünntem Nährmedium (Malzextraktmedium 10 %ig) benetzt. Die Lichtbedingungen entsprachen auch hier Nordseitenklima. In den ersten fünf Wochen erfolgte die Inkubation gleichzeitig mit den Proben für die algistatische Wirkung mit Grünalgen. Es war eine relative Luftfeuchtigkeit von 95 % eingestellt. Die Prüflinge wurden regelmäßig mit verdünntem Leitungswasser bzw. mit Nährmedium benetzt. Auch hier erfolgte eine visuelle Auswertung auf sichtbares Pilzwachstum und (nach Färbung der Proben mit dem Fluorosensor DAPI = 4',6-Diamidino-2-phenylindoldihydrochlorid) mittels Epifluoreszenzmikroskopie. Als Maß für eine ausreichende fungistatische Wirkung sollte eine Vorgabe von 150.000 Pilze/cm² unterschritten werden.

Bei Proben aus dem Stand der Technik lässt sich ein höherer Algen- bzw. Pilzbefall finden.

Die Überprüfungsmethode bestätigt somit eine Korrelation zwischen der Messung der Wassergehalte und der Empfindlichkeit für Algen- und/oder Pilzbefall.

Aufgrund der Untersuchungen konnte festgestellt werden, dass der Parameter, auf den es tatsächlich ankommt, um das Wachstum von Mikroorganismen zu verhindern, die (maximale und minimale) Wasseraufnahme ist: Beispielsweise bei einer Wasseraufnahme von z.B. 650 g/m² oder weniger, die bei der Trocknung auf 200 g/m² oder niedriger zurückgeht, allgemein in bei einer Wasseraufnahme von 200 g/m² oder darunter am Ende eines Trockenschrittes und am Endpunkt eines Benetzungsschrittes mit Wasser ein Wassergehalt von 350 g/m² oder darüber, können Algen und Pilze nicht wachsen (die Feuchtigkeitsphasen sind zu kurz, es findet kein Aufschaukeln der Wassermenge statt, an der Oberfläche steht kein Wasser in flüssiger Form zur Verfügung). Die Entwicklung der Mikroorganismen wird gehemmt und es kommt zu deren Absterben.

Dagegen wird, wenn die Feuchtigkeitsaufnahme selbst im Falle maximaler Aufnahme nicht über 200 g/m² ansteigt, zwar die Normanforderung nach EN 998-1 erfüllt, aber es besteht ein hohes Risiko für Algen- und Pilzbefall (wohl, da alles Wasser an der Oberfläche verbleibt).

Die Erfindung betrifft daher die Verwendung einer mineralischen Mischung zur Herstellung eines einen Mikroorganismenbefall vermindernden oder behindernden Deckputzes, wobei die mit Zugabewasser angemachte Mischung auf eine darunter liegende Schicht eines Wärmeverbundsystems aufgebracht und härten gelassen wird, und wobei die mineralische Mischung in Form eines Trockenmörtels für wasserabweisende Deckputze vorliegt, welche neben mindestens einem mineralischen Bindemittel und mineralischer Gesteinskörnung mindestens zwei Hydrophobierungsmittel beinhaltet, dadurch gekennzeichnet, dass mindestens eines der Hydrophobierungsmittel UV-unbeständig ist und mindestens eines UV-beständig ist und dass die mineralische Mischung nach ihrem Auftragen bei Benetzung mit Wasser in einem Testverfahren, nach Erreichen der ungefähren Zyklenkonstanz (wie oben definiert), am Ende eines jeden Benetzungsschrittes mindestens einen Wassergehalt von 350 g/m² oder darüber (in einer bevorzugten Ausführungsform nicht mehr als 650 g/m²) aufweist und andererseits im selben Testzyklus am Ende eines jeden Trocknungsschrittes einen Wassergehalt von nicht mehr als 200 g/m² aufweist, wobei in dem verwendeten Testverfahren für jeden Testzyklus auf ein hydrophobes Dämmmaterial ein Haftmörtel mit Gewebeeinlage und dann ein Deckputz aufgebracht werden, die so erhaltenen Prüfkörper-Platten am Randbereich mit einem hydrophoben Material (z.B. Paraffin) abgedichtet, (z.B. 5 Tage) vor Start des ersten Messzyklus unter dem Messklima (20°C / 65% relative Luftfeuchte) stabilisiert und jeweils in Wasser bei 20°C mit der Deckputzschicht nach unten (beispielsweise in einer Plastikwanne) eingelegt werden, was maximale Benetzung simuliert (Benetzungsschritt), dort für 6 Stunden verbleiben und dann 18 Stunden auf einem Rostregal in einer Klimakammer bei 20°C / 65% relative Luftfeuchte getrocknet werden, dieser 6 plus 18 Stunden-Vorgang viermal wiederholt wird und die Platten dann 72 Stunden getrocknet werden (Ende des ersten Testzyklus) und vor jeder Wägung Oberflächenwasser abgetupft wird und je Messreihe ein oder mehrere dieser Testzyklen mindestens bis zum Erreichen einer Zyklenkonstanz (Abweichen der maximalen Wassergehalte voneinander in g/m² um nicht mehr als ± 25 %, ebenso der minimalen Wassergehalte voneinander, jeweils vom Mittelwert der Messungen je Testzyklus; vorzugsweise jeweils um nicht mehr als ± 15 %) und danach zur Bestimmung des Wassergehalts wie oben definiert aufgenommen werden.

Die UV-Strahlung im normalen Tageslicht, das bei dem Testverfahren einfällt, reicht hier aus, um beispielsweise das UV-unbeständige Hydrophobierungsmittel ausreichend zu verändern.

Das Testverfahren (Testmethode) mit den genannten Testzyklen (in der im vorstehenden Absatz genannten allgemeinen und der zuvor wiedergegebenen detaillierten Form) ermöglicht, viel schneller als zuvor festzustellen, ob ein geeigneter Schutz vor Mikroorganismenwachstum erreicht werden kann.

Weitere vorteilhafte Ausführungsformen der Erfindung finden sich in den Ansprüchen, die hier durch Bezugnahme aufgenommen werden, sowie nachfolgend.

Die Verwendung des Trockenmörtels erfolgt erfindungsgemäß auf Wärmedämmverbundsystemen.

Die vor- und nachfolgenden spezielleren Definitionen von Begriffen und Merkmalen können, einzeln, zu mehreren oder alle, bei jeder Ausführungsform der Erfindung anstelle der allgemeineren Begriffe oder Merkmale verwendet werden, was zu vorteilhaften speziellen Ausführungsformen der Erfindungsgegenstände führt.

Grenzwerte für wasserabweisende Putze ("Wasserabweisend" nach EN 998-1, insbesondere DIN V 18550, sind wie oben definiert.

Wo Angaben in Gewichtsprozent (Gew.-%) gemacht werden, beziehen sich diese sofern nicht ausdrücklich anders angegeben, auf die jeweils gesamte trockene erfindungsgemäß zu verwendende mineralische Mischung (Trockenmörtel), d.h. mit allen Bestandteilen.

Korngrößenangaben basieren im Folgenden (angesichts der oft uneinheitlichen Form von Körnern) auf der Basis der Maschenweite eines Siebes, das das betreffende Korn noch durchlässt.

Als das oder die mineralischen Bindemittel kommen insbesondere solche in Betracht, die für bei Hydratation (hydraulische und/ oder latent hydraulische Aushärtung) und/oder Carbonathärtung erfolgende Härtung (Abbinden) geeignet sind, z.B. ein oder mehrere ausgewählt aus gebrannter Kalk, Ca-Silicat, Klinker, Gips (z.B. Anhydrit, α- oder β-Halbhydrat), Magnesiabinder, Magnesiumoxychloridzement, Wasserglas, Aluminatzement, Phosphatbinder, Natriumaluminiumsilikate, Flugasche und insbesondere ausgewählt aus: Brennofenzement, vorzugsweise Portlandzement, insbesondere eisenoxidarm als Weißzement, Calciumsulfoaluminatzement, Belitzement oder Weißkalkhydrat (gelöschter Kalk = Calciumhydroxid = Ca(OH)₂) und vorteilhaft Mischungen von Portlandzement und Weißkalkhydrat (letzterer beispielsweise in einem Anteil von bis zu 20 Gew.-%). Diese mineralischen Bindemittel haben vorzugsweise, bezogen auf den gesamten Trockenmörtel, einen Gewichtsanteil von insgesamt 1 bis 50 Gew.-%, insbesondere 10 bis 40 Gew.-%, z.B. von 15 bis 35 Gew.-%.

Als mineralische Gesteinskörnung kommen z.B. Gesteinsmehl wie Kalksteinfüller, Sand oder Split (insbesondere Edelsplit) oder insbesondere sonstige Gesteinskörnung, wie Kalksteinkörnung, oder zwei oder mehr davon, insgesamt in einem möglichen Anteil beispielsweise von 20 bis 95 Gew.-%, vorzugsweise von 50 bis 90 Gew.-%, beispielsweise von 60 bis 85 Gew.-%, in Frage, beispielsweise mit einer Korngröße von 5 mm oder kleiner, z.B. in einer denkbaren bevorzugten Ausführungsform der Erfindung von bis zu 4 mm.

Als weitere Zusätze können vorteilhaft Luftporenbildner, beispielsweise in einem Anteil von 0,0001 bis 0,2, insbesondere beispielsweise von 0,001 bis 0,1 Gew.-%, vorgesehen sein. Als Luftporenbildner finden Substanzen, welche im Trockenmörtel nach dem Anmachen mit Wasser einen stabilen Mikroschaum bilden, Verwendung, beispielsweise Harzseifen oder Resine oder insbesondere Fettalkoholsulfate, oder ferner Gemische von zwei oder mehr dieser Komponenten.

Als Stabilisatoren (Dispersionsstabilisatoren, Absetzverhinderungsmittel) können insbesondere solche auf Alkylcellulosebasis, wie Methylcellulose, Verwendung finden, in einem Anteil, der beispielsweise in einer bevorzugten erfindungsgemäßen mineralischen Mischung in einem Anteil von 0,005 bis 0,25, vorzugsweise 0,05 bis 0,15 Gew.-%, vorliegen kann, oder auf Bentonitbasis, der beispielsweise in einer bevorzugten Ausführungsform in einem Anteil von 0,05 bis 0,5, vorzugsweise 0,01 bis 0,3 Gew.-%, vorliegen kann, oder Gemische davon, Verwendung. Der oder die Stabilisatoren sind in die Mischung in einer bevorzugten Ausführungsform der Erfindung pulverförmig eingearbeitet.

Als UV-unbeständiges Hydrophobierungsmittel sind insbesondere solche amphiphilen Moleküle zu nennen, die mindestens eine ungesättigte Bindung beinhalten und daher durch UV-Licht angeregt und umgewandelt (z.B. von der trans- in die cis-Form oder umgekehrt) oder zersetzt werden können, wie Salze mindestens einer C₁₀-C₃₀-Fettsäure mit ein oder mehreren Doppelbindungen oder die Säure selbst, wie Palmitoleinsäure, Vaccensäure, Icosensäure, Cetoleinsäure oder insbesondere Ölsäure; insbesondere deren Erdalkali-, Alkali-, Aluminium- oder Zinksalze, wie Natriumoleat, das sich in situ in ein entsprechendes Calciumsalz umwandeln kann. Der Anteil an UV-unbeständigem Hydrophobierungsmittel liegt vorteilhaft bei 0,001 bis 1 Gew.-%, z.B. im Bereich von 0,02 bis 0,5 Gew.-%, z.B. im Bereich von 0,05 bis 0,15 Gew.-%.

Als UV-beständiges Hydrophobierungsmittel sind insbesondere solche amphiphilen Moleküle zu nennen, die nur mindestens ein oder mehrere gesättigte unverzweigte C₁₀-C₃₀-Fettsäuren oder Fettsäurereste, vorzugsweise jeweils einen dieser Reste, beinhalten und keine ungesättigten Bindungen zwischen Kohlenstoffatomen aufweisen, wie freie Säuren ausgewählt aus Laurinsäure, Myristinsäure, Pentadecansäure, Palmitinsäure, Margarinsäure, Nonadecansäure, Arachinsäure, Behensäure, Lignocerinsäure, Cerotinsäure, Montansäure, Melissinsäure oder insbesondere Stearinsäure; inbesondere deren Erdalkali-, Alkali-, Aluminium- oder Zinksalze, wie Calciumstearat, Magnesiumstearat oder Zinkstearat. Der Anteil an UV-beständigem Hydrophobierungsmittel liegt vorteilhaft bei 0,001 bis 1 Gew.-%, z.B. im Bereich von 0,02 bis 0,5 Gew.-%, z.B. im Bereich von 0,03 bis 0,13 Gew.-%.

Als UV-beständige Silikonharze sind solche wie z.B. hochdisperse Alkyl-, wie Methylsilsesquioxane oder Polydimethylsiloxan zu nennen. Der Anteil an Silikonharzen liegt vorteilhaft bei 0,001 bis 1 Gew.-%, z.B. im Bereich von 0,02 bis 0,8 Gew.-%, z.B. im Bereich von 0,05 bis 0,5 Gew.-%.

Ohne an diese Erklärung gebunden sein zu wollen, ermöglicht die Kombination aus UV-beständigen und UV-unbeständigen Hydrophobierungsmitteln, dass das UV-unbeständige außen an der Putzoberfläche an Wirksamkeit verliert, somit eine gewisse Hydrophilie an der Oberfläche ermöglicht und so keinen Wasserfilm an der Oberfläche zulässt, während andererseits im Putzinneren beide Hydrophobierungsmittel vorhanden sind.

Weitere Zusätze sind möglich, wie beispielsweise Pigmente, Farbstoffe, Fließmittel, wie Benetzungsmittel, Fasern z.B. aus Kunststoffen oder Glas), Abbindungsbeschleuniger, Abbindeverzögerer, siliciumorganische Bindemittel wie Silikone oder Silane, haftungsverbessernde Zusätze, Thixotropiermittel, Antioxidantien, Kunstharze, Verarbeitungshilfsstoffe, Elastizität verleihende Zusatzmittel, Dispersionspulver oder dergleichen, oder zwei oder mehr davon, die insgesamt z.B. 0,001 bis 20 Gew.-%, beispielsweise 0,005 bis 10 Gew.-%, der Trockenmörtel ausmachen können.

Eine erfindungsgemäß verwendete mit Wasser angemachte mineralische Mischung beinhaltet einen vorstehend beschriebenen Trockenmörtel sowie ferner Zugabewasser in üblichen Anteilen, beispielsweise in einer möglichen bevorzugten Ausführungsform in einem Anteil von 10 bis 50, vorzugsweise von 25 bis 30 insbesondere 26 bis 28 Gewichtsprozent, bezogen auf die Trockenmasse.

Obwohl nicht zwingend erforderlich, können nicht umweltschädigende Hemmstoffe für das Wachstum von Mikroorganismen wie Zinksulfid zugesetzt sein, beispielsweise in einer Menge von 0,1 bis 5 Gew.-%, beispielsweise von 0,3 bis 1 Gew.-%, beigemengt werden.

Es zeigt Fig. 1 graphisch den Wassergehalt über die Zeit für Testzyklen für eine unter die Erfindung fallende Verwendung und zwei nicht erfindungsgemäße Verwendungen mineralischer Mischungen nach deren Mischen mit Zugabewasser, Abbinden und Trocknen.

Das nachfolgende Beispiel dient der Illustration der Erfindung, ohne ihren Umfang einzuschränken:
Rezeptur für einen mineralischen Edelputz (Fig. 1, Nr. 2), der die erfindungsgemäßen Anforderungen an der Feuchtegehalt gemäß dem oben beschriebenen Testverfahren erfüllt:

| ROHMATERIAL | %-ANTEIL Beispiel | %-ANTEIL Vergleichsbeispiel 1 | %-ANTEIL Vergleichsbeispiel 2 |
|---|---|---|---|
| Weißzement | 9,00 | 9,00 | 9,00 |
| Weißkalkhydrat | 14,00 | 14,00 | 14,00 |
| Kalksteinkörnung 0 - 3 mm | 76,20 | 76,25 | 76,08 |
| Methylcellulose | 0,10 | 0,10 | 0,10 |
| Luftporenbildner | 0,02 | 0,02 | 0,02 |
| Dispersionspulver | 0,50 | 0,50 | 0,50 |
| UV-beständiges Hydrophobierungsmittel | 0,10 | 0,13 | 0,30 |
| UV-unbeständiges Hydrophobierungsmittel | 0,08 | - | |
| GESAMT | 100,00 | 100,00 | 100,00 |

Die Kurve für den Feuchtigkeitsgehalt im oben beschriebenen Testzyklus findet sind in Fig.1 als Kurve Nr. 2.

### Vergleichsbeispiele:

Es zeigt sich, dass die Mischung gemäß Nr. 1 in Fig. 1 (Vergleichsbeispiel 1) im oben beschriebenen Testzyklus einen zu hohen Wassergehalt (vollständige Durchdringung mit Wasser) zeigte und somit die Normanforderungen von EN 998-1 nicht erfüllte.

Andererseits erfüllte die Mischung nach Nr. 3 (Vergleichsbeispiel 2) in Fig. 1 zwar die Normanforderungen von EN 998-1, doch kam es hier zu einem hohen Risiko für Algen- und Pilzbefall, wie unter den eingangs beschriebenen Bedingungen gezeigt werden konnte. Die Mischung Nr. 2 in Fig. dagegen zeigte bei Untersuchung auf algistatische Wirkung und fungistatische Wirkung folgende Ergebnisse in dem eingangs beschriebenen Test:
Algistatische Wirkung: Bei der visuellen Begutachtung der Proben zeigte sich ein geringfügiger Algenbewuchs, ohne flächenhafte Ausdehnung in Form von z.B. Algenschleiern, sowohl auf der vorkonditionierten als auch auf der unbehandelten Probe in Form von sehr kleinen, kaum erkennbaren Spots. Auf der vorkonditionierten Probe waren die grünen Algenspots deutlicher als auf der unbehandelten Probe, wo die Grünfärbung nur sehr schwach erkennbar war. Die Algen waren in den Vertiefungen und Poren der Oberfläche gewachsen.

Mit Hilfe der Epifluoreszenzmikroskopie wurden jeweils unter Auswertung von 30 Einzelmessungen je Probe und Mittelwertbildung auf der vorkonditionieren Probe Algenzellzahlen von 38.000 Zellen pro m² gefunden, die Algen waren sehr heterogen verteilt (Bildung sogenannter "Hot Spots", visuell erkennbar als kleine grüne Pinkte). Auf der unbehandelten Probe lag die Zellzahl mit 15.000 Zellen pro cm² unter der der vorkonditionierten Probe. Hier wurden zudem weniger große und mehr kleine Algenaggregate sowie Einzelzellen nachgewiesen. Auf beiden Proben wurde die Vorgabe von 200.000 pro cm² deutlich unterschritten, die algistatische Wirkung kann somit als sehr gut bezeichnet werden.

Fungistatische Wirkung: Die visuelle Begutachtung zum Abschluss der Inkubation zeigte kein auffälliges Pilzwachstum auf den beiden Probekörpern. Lediglich mikroskopisch kleine, dunkel gefärbte Spots mit Pilzen waren erkennbar, die Zelldichte war zu gering für eine lichtmikroskopische Auswertung der Proben.

Mittels Epifluoreszenzmikroskop und DAPI wurden die Zellzahlen an 30 Stellen bestimmt und anschließend gemittelt. Auf der vorkonditionierten Probe wurden nur geringe Biomassen von 18.000 Zellen pro cm² bestimmt, große Kolonien wurden nicht nachgewiesen. Die Pilze lagen meist in kurzen Hyphen und kleineren Aggregaten vor. Auf der unbehandelten Probe wurden Zellzahlen von weniger als 5.000 Zellen pro cm² ermittelt, auch hier wurden nur kurze Hyphen und wenige Sporen nachgewiesen. Auf beiden Proben wurden vor allem die Gattungen *Cladosporium sp.* und *Chaetomium sp.* detektiert. Insgesamt wurde die Vorgabe von maximal 150.000 Zellen pro cm² auf beiden Proben klar unterschritten. Eine sehr gute fungistatische Wirkung der Proben kann daher bestätigt werden.

Daneben kann eine nur oberflächliche Durchdringung mit Wasser gezeigt werden sowie eine hohe Beständigkeit des Oberflächen-pH-Wertes auch bei den eingangs beschriebenen Auswaschtests (nach 7 Zyklen war der pH nach 24 Stunden Trocknen noch bei 8,5).

Somit zeigt sich, dass das Kriterium einer Senkung des Wassergehalts nach Trocknung auf ungefähr 200 g/m² dickenunabhängig und einen anschließenden moderaten Anstieg bei Benetzung mit Wasser im oben beschriebenen Testzyklus auf 350 oder mehr (im Beispiel bis ca. 650) g/m² das entscheidende Kriterium bildet für einerseits Konformität mit der Norm EN 998-1 und andererseits geringstmöglichen Pilzbefall.

## Patentansprüche

1. Verwendung einer mineralischen Mischung zur Herstellung eines einen Mikroorganismenbefall vermindernden oder verhindernden Deckputzes, wobei die mit Zugabewasser angemachte Mischung auf eine darunter liegende Schicht eines Wärmedämmverbundsystems aufgebracht und härten gelassen wird, wobei die mineralische Mischung in Form eines Trockenmörtels für wasserabweisende Deckputze vorliegt, welche neben mindestens einem mineralischen Bindemittel und mineralischer Gesteinskörnung mindestens zwei amphiphile Hydrophobierungsmittel beinhaltet, **dadurch gekennzeichnet, dass** mindestens eines der Hydrophobierungsmittel UV-unbeständig ist, da es mindestens eine ungesättigte Bindung bein-haltet, und mindestens eines UV-beständig ist, da es nur ein oder mehrere gesättigte C10-C30-Fettsäuren oder Fettsäurereste und keine ungesättigten Bindungen zwischen Kohlenstoffatomen beinhaltet, und dass die mineralische Mischung nach ihrem Auftragen bei Benetzung mit Wasser in einem Testverfahren, nach Erreichen der ungefähren Zyklenkonstanz - das heißt, bei Abweichen der maximalen Wassergehalte in g/m² voneinander um nicht mehr als ± 25 %, wie auch der minimalen Wassergehalte voneinander um nicht mehr als ± 25 %, jeweils vom Mittelwert der Messungen je Testzyklus - , am Ende eines jeden Benetzungsschrittes mindestens einen Wassergehalt von 350 g/m² oder darüber aufweist und andererseits im selben Testzyklus am Ende eines jeden Trocknungsschrittes einen Wassergehalt von nicht mehr als 200 g/m² aufweist, wobei in dem verwendeten Testverfahren für jeden Testzyklus auf ein hydrophobes Dämmmaterial ein Haftmörtel mit Gewebeeinlage und dann ein Deckputz aufgebracht werden, die so erhaltenen Prüfkörper-Platten am Randbereich mit einem hydrophoben Material abgedichtet, vor Start des ersten Messzyklus unter dem Messklima, das heißt bei 20°C / 65% relative Luftfeuchte, stabilisiert und in einem Benetzungsschritt jeweils in Wasser bei 20°C mit der Deckputzschicht nach unten eingelegt werden, was maximale Benetzung simuliert, dort für 6 Stunden verbleiben und dann in einem Trocknungsschritt 18 Stunden auf einem Rostregal in einer Klimakammer bei 20°C / 65% relative Luftfeuchte getrocknet werden, dieser 6 plus 18 Stunden-Vorgang viermal wiederholt wird und die Platten dann 72 Stunden getrocknet werden, was das Ende des ersten Testzyklus bedeutet, und vor jeder Wägung Oberflächenwasser abgetupft wird und je Messreihe ein oder mehrere dieser Testzyklen mindestens bis zum Erreichen einer ungefähren Zyklenkonstanz wie oben definiert und anschließenden Bestimmung des Wassergehalts aufgenommen werden.

2. Verwendung einer mineralischen Mischung nach Anspruch 1, **dadurch gekennzeichnet, dass** am Ende eines jeden Benetzungsschrittes mindestens einen Wassergehalt von nicht mehr als 650 g/m² gefunden wird.

3. Verwendung einer mineralischen Mischung nach Anspruch 1 oder Anspruch 2, **dadurch gekennzeichnet, dass** wie neben den genannten Bestandteilen ein oder mehrere weitere Zusätze ausgewählt aus Luftporenbildnern und Stabilisatoren beinhaltet.

4. Verwendung einer mineralischen Mischung nach Anspruch 1 oder 2, **dadurch gekennzeichnet, dass** als das oder die mineralischen Bindemittel gebrannter Kalk, Ca-Silicat, Klinker, Gips in Form von Anhydrit, α- oder β-Halbhydrat, Magnesiabinder, Magnesiumoxychloridzement, Wasserglas, Aluminatzement, Phosphatbinder, Natriumaluminiumsilikate, Flugasche, Portlandzement, sonstigem Brennnoffenzement, Calciumsulfoaluminatzement, Belitzement oder Weißkalkhydrat, oder Mischungen von zwei oder mehr, davon vorgesehen sind.

5. Verwendung einer mineralischen Mischung nach einem der Ansprüche 1 bis 3, **dadurch gekennzeichnet, dass** als das mineralische Binde-mittel Weißzement oder Weißzement und/oder Weißkalkhydrat vorgesehen sind.

6. Verwendung einer mineralischen Mischung nach einem der Ansprüche 1 bis 5, **dadurch gekennzeichnet, dass** das oder die mineralischen Bindemittel, bezogen auf den gesamten Trockenmörtel, einen Gewichtsanteil von insgesamt 1 bis 50 Gew.-%, insbesondere 10 bis 40 Gew.-%, z.B. von 15 bis 35 Gew.-%, haben.

7. Verwendung einer mineralischen Mischung nach einem der Ansprüche 1 bis 6, **dadurch gekennzeichnet, dass** als Gesteinskörnung Gesteinsmehl, Sand oder Split oder Kalksteinkörnung, oder Mischungen von zwei oder mehr davon, vorgesehen sind.

8. Verwendung einer mineralischen Mischung nach einem der Ansprüche 1 bis 7, **dadurch gekennzeichnet, dass** als Gesteinskörnung Kalksteinkörnung vorgesehen ist.

9. Verwendung einer mineralischen Mischung nach einem der Ansprüche 1 bis 8, **dadurch gekennzeichnet, dass** die Korngröße der Gesteins-körnung bei 5 mm oder kleiner, insbesondere bei bis zu 4 mm liegt.

10. Verwendung nach Anspruch 1 einer mineralischen Mischung nach einem der Ansprüche 1 bis 9, **dadurch gekennzeichnet, dass** der Anteil der Gesteinskörnung, bezogen auf die gesamte trockene Mischung, von 20 bis 95 Gew.-%, vorzugsweise von 50 bis 90 Gew.-%, beispielsweise von 60 bis 85 Gew.-%, beträgt.

11. Verwendung einer mineralischen Mischung nach einem der Ansprüche 1 bis 10, **dadurch gekennzeichnet, dass** als UV-unbeständige(s) Hydrophobierungsmittel amphiphile Moleküle vorgesehen sind, die mindestens eine ungesättigte Bindung beinhalten, wie Salze mindestens einer C₁₀-C₃₀-Fettsäure mit ein oder mehreren Doppelbindungen oder die Säure selbst, z.B. Palmitoleinsäure, Vaccensäure, Icosensäure, Cetoleinsäure oder insbesondere Ölsäure; insbesondere deren Erdalkali-, Alkali-, Aluminium- oder Zinksalze, wie Natriumoleat, das sich in situ in ein entsprechendes Calciumsalz um-wandeln kann.

12. Verwendung einer mineralischen Mischung nach Anspruch 11, **dadurch gekennzeichnet, dass** der Anteil an UV-unbeständigem Hydrophobierungsmittel bei 0,001 bis 1 Gew.-%, z.B. im Bereich von 0,02 bis 0,5 Gew.-%, z.B. im Bereich von 0,05 bis 0,15 Gew.-%, liegt.

13. Verwendung einer mineralischen Mischung nach einem der Ansprüche 1 bis 12, **dadurch gekennzeichnet, dass** als UV-beständige(s) Hydrophobierungsmittel solche amphiphilen Moleküle vorge-sehen sind, die mindestens eine gesättigte unverzweigte C₁₀-C₃₀-Fettsäure beinhalten, wie freie Säuren ausgewählt aus Laurinsäure, Myristinsäure, Pentadecansäure, Palmitinsäure, Margarinsäure, Nonadecansäure, Arachinsäure, Behensäure, Lignocerinsäure, Cerotinsäure, Montansäure, Melissinsäure oder insbesondere Stearinsäure; inbesondere deren Erdalkali-, Alkali-, Aluminium- oder Zinksalze, wie Calciumstearat, Magnesiumstearat oder Zinkstearat; oder ferner UV-beständige Silikonharze, z.B. hochdisperse Alkyl, wie Methylsilsesquioxane oder Polydimethylsiloxan, vorgesehen sind.

14. Verwendung einer mineralischen Mischung nach einem der Ansprüche 1 bis 13, **dadurch gekennzeichnet, dass** der Anteil an UV-beständigem Hydrophobierungsmittel bei 0,001 bis 1 Gew.-%, z.B. im Bereich von 0,02 bis 0,5 Gew.-%, z.B. im Bereich von 0,03 bis 0,13 Gew.-%, liegt.

15. Verwendung einer mineralischen Mischung nach einem der Ansprüche 1 bis 14, **dadurch gekennzeichnet, dass** als weitere Zusätze ein oder mehrere Luftporenbildner, beispielsweise in einem Anteil von 0,0001 bis 0,2, insbesondere beispielsweise von 0,001 bis 0,1 Gew.-%, beinhaltet sind.

16. Verwendung einer mineralischen Mischung nach einem der Ansprüche 1 bis 15, **dadurch gekennzeichnet, dass** als weitere Zusätze ein oder mehrere Stabilisatoren beinhaltet sind, insbesondere solche auf Alkylcellulosebasis, wie Methylcellulose.

17. Verwendung einer mineralischen Mischung nach Anspruch 16, **dadurch gekennzeichnet, dass** der Anteil des oder der Stabilisatoren bei 0,005 bis 0,25, vorzugsweise 0,05 bis 0,15 Gew.-%, liegt.

18. Verwendung einer mineralischen Mischung nach einem der Ansprüche 1 bis 17, **dadurch gekennzeichnet, dass** ein oder mehrere weitere Zusätze, wie z.B. Pigmente, Farbstoffe, Fließmittel, wie Benetzungsmittel, Fasern z.B. aus Kunststoffen oder Glas), Dispersionspulver, Abbindungsbeschleuniger, Abbindeverzögerer, siliciumorganische Bindemittel wie Silikone oder Silane, haftungsverbessernde Zusätze, Thixotropiermittel, Antioxidantien, Kunstharze, Verarbeitungshilfsstoffe oder Elastizität verleihende Zusatzmittel, beinhaltet sind.

19. Verwendung einer mineralischen Mischung nach Anspruch 18, **dadurch gekennzeichnet, dass** der oder die weiteren Zusätze insgesamt 0,001 bis 20 Gew.-%, beispielsweise 0,005 bis 10 Gew.-%, der mineralischen Mischung ausmachen.

20. Verwendung einer mineralischen Mischung nach einem der Ansprüche 1 bis 19, **dadurch gekennzeichnet, dass** sie als weiteren Zusatz Zinksulfid beinhaltet.

## Claims

1. Use of a mineral mixture for producing a final rendering which reduces or prevents a microorganism infestation, wherein the mixture mixed with additional water is applied to an underlying layer of a thermal insulation composite system or and is allowed to harden, wherein the mineral mixture is in the form of a dry mortar for water-repellent final rendering, which contains, in addition to at least one mineral binder and mineral aggregate, at least two amphiphilic hydrophobising agents, **characterised in that** at least one of the hydrophobising agents is UV-unstable because it contains at least one unsaturated bond, and at least one agent is UV-stable because it contains only one or more saturated C₁₀-C₃₀ fatty acids or fatty acid residues and no unsaturated bonds between carbon atoms, and **in that** the mineral mixture has, after being applied while being wetted with water in a test process, after achieving the approximate cycle constant - i.e., when the maximum water contents in g/m² deviate from each other by no more than ± 25% and also the minimum water contents deviate from each other by no more than ± 25%, in each case from the average value of the measurements per test cycle - at the end of each wetting step, at least one water content of 350 g/m² or more and, on the other hand, in the same test cycle at the end of each drying step a water content of no more than 200 g/m², wherein in the test method used, for each test cycle, an adhesive mortar having a fabric lining and then a final rendering are applied onto a hydrophobic insulating material, the thus obtained test body plates are sealed at the edge region with a hydrophobic material, are stabilised prior to the start of the first measuring cycle under measuring conditions, i.e. at 20°C / 65% relative humidity, and are laid in a wetting step in each case in water at 20°C with the final rendering layer towards the bottom, which simulates maximum wetting, remain there for 6 hours and then are dried in a drying step for 18 hours on a grating shelf in a climate chamber at 20°C / 65% relative humidity, this 6+18 hours process is repeated four times and the plates are then dried for 72 hours which indicates the end of the first test cycle, and surface water is mopped up prior to each weighing process and for each measuring series one or more of these test cycles is started at least until an approximate cycle constant as defined above is achieved and until the water content is subsequently determined.

2. Use of a mineral mixture according to Claim 1, **characterised in that** at the end of each wetting step at least one water content of no more than 650 g/m² is detected.

3. Use of a mineral mixture according to Claim 1 or Claim 2, **characterised in that** it contains one or more further additives selected from air-entraining agents and stabilising agents in addition to said components.

4. Use of a mineral mixture according to Claim 1 or 2, **characterised in that** the following are provided as the mineral binder(s): quicklime, Ca silicate, clinker, gypsum in the form of anhydrite, α or β hemihydrate, magnesia binder, magnesium oxychloride cement, water glass, aluminate cement, phosphate binder, sodium aluminium silicates, fly-ash, Portland cement, other kiln cement, calcium sulfoaluminate cement, belite cement or white lime hydrate, or mixtures of two or more thereof.

5. Use of a mineral mixture according to any one of Claims 1 to 3, **characterised in that** white cement or white cement and/or white lime hydrate are provided as the mineral binder.

6. Use of a mineral mixture according to any one of Claims 1 to 5, **characterised in that** the mineral binder(s) have a weight proportion of a total of 1 to 50 wt.%, in particular 10 to 40 wt.%, e.g. 15 to 35 wt.%, based on the total dry mortar.

7. Use of a mineral mixture according to any one of Claims 1 to 6, **characterised in that** the following are provided as the aggregate: stone dust, sand or grit or limestone aggregate, or mixtures of two or more thereof.

8. Use of a mineral mixture according to any one of Claims 1 to 7, **characterised in that** limestone aggregate is provided as the aggregate.

9. Use of a mineral mixture according to any one of Claims 1 to 8, **characterised in that** the particle size of the aggregate is 5 mm or lower, in particular up to 4 mm.

10. Use according to Claim 1 of a mineral mixture according to any one of Claims 1 to 9, **characterised in that** the proportion of aggregate is 20 to 95 wt.%, preferably 50 to 90 wt.%, e.g. 60 to 85 wt.%, based on the total dry mixture.

11. Use of a mineral mixture according to any one of Claims 1 to 10, **characterised in that** amphiphilic molecules are provided as the UV-unstable hydrophobising agent(s), which molecules have at least one unsaturated bond, such as salts having at least one C₁₀-C₃₀ fatty acid having one or more double bonds or the acids themselves, e.g. palmitoleic acid, vaccenic acid, icosenoic acid, cetoleic acid or in particular oleic acid; in particular their alkaline earth salts, alkaline salts, aluminium salts or zinc salts, such as sodium oleate which can react *in situ* to form a corresponding calcium salt.

12. Use of a mineral mixture according to Claim 11, **characterised in that** the proportion of UV-unstable hydrophobising agent is 0.001 to 1 wt.%, e.g. in the range of 0.02 to 0.5 wt.%, e.g. in the range of 0.05 to 0.15 wt.%.

13. Use of a mineral mixture according to any one of Claims 1 to 12, **characterised in that** provided as the UV-stable hydrophobising agent(s) are those amphiphilic molecules which contain at least one saturated, unbranched C₁₀-C₃₀ fatty acid, such as free acids selected from lauric acid, myristic acid, pentadecanoic acid, palmitic acid, margaric acid, nonadecanoic acid, arachidic acid, behenic acid, lignoceric acid, cerotic acid, montanic acid, melissic acid or in particular stearic acid; in particular their alkaline earth salts, alkaline salts, aluminium salts or zinc salts, such as calcium stearate, magnesium stearate or zinc stearate; or further UV-stable silicone resins, e.g. highly dispersed alkyl, such as methylsilsesquioxane or polydimethylsiloxane are provided.

14. Use of a mineral mixture according to any one of Claims 1 to 13, **characterised in that** the proportion of UV-stable hydrophobising agent is 0.001 to 1 wt.%, e.g. in the range of 0.02 to 0.5 wt.%, e.g. in the range of 0.03 to 0.13 wt.%.

15. Use of a mineral mixture according to any one of Claims 1 to 14, **characterised in that** one or more air-entraining agents are contained as further additives, e.g. in a proportion of 0.0001 to 0.2, in particular e.g. 0.001 to 0.1 wt.%.

16. Use of a mineral mixture according to any one of Claims 1 to 15, **characterised in that** one or more stabilising agents are contained as further additives, in particular those based on alkyl cellulose, such as methyl cellulose.

17. Use of a mineral mixture according to Claim 16, **characterised in that** the proportion of the stabilising agent(s) is 0.005 to 0.25, preferably 0.05 to 0.15 wt.%.

18. Use of a mineral mixture according to any one of Claims 1 to 17, **characterised in that** one or more further additives, such as e.g. pigments, dyes, fluxing agents, such as wetting agents, fibres, e.g. made of synthetic material or glass, dispersion powders, setting accelerators, setting inhibitors, organosilicon binders such as silicones or silanes, adhesion-promoting additives, thixotropic agents, antioxidants, synthetic resins, processing agents or elasticity-imparting additives are contained.

19. Use of a mineral mixture according to Claim 18, **characterised in that** the additive or the further additives make up a total of 0.001 to 20 wt.%, e.g. 0.005 to 10 wt.% of the mineral mixture.

20. Use of a mineral mixture according to any one of Claims 1 to 19, **characterised in that** it contains zinc sulphide as a further additive.

## Revendications

1. Utilisation d'un mélange minéral pour la fabrication d'un enduit de finition réduisant ou empêchant l'apparition de microorganismes, dans laquelle le mélange gâché avec de l'eau ajoutée est appliqué sur une couche sous-jacente d'un système composite d'isolation thermique et est laissé à durcir, dans laquelle le mélange minéral se présente sous la forme d'un mortier sec destiné à des enduits de finition hydrofuges qui contient en plus d'au moins un liant minéral et de granulats minéraux au moins deux agents d'imperméabilisation amphiphiles, **caractérisée en ce qu'**au moins l'un des agents d'imperméabilisation n'est pas résistant aux UV, parce qu'il contient au moins une liaison non saturée, et au moins un est résistant aux UV, parce qu'il ne contient qu'un ou plusieurs acides gras C10-C30 ou radicaux d'acides gras saturés et aucune liaison non saturée entre des atomes de carbone, et **en ce que** le mélange minéral présente après son application, lors d'un mouillage à l'eau dans une procédure de test, après avoir atteint la constance de cycle approximative - c'est-à-dire avec des écarts des teneurs en eau maximales en g/m² l'un par rapport à l'autre de pas plus de ± 25 %, comme aussi des teneurs en eau minimales l'un par rapport à l'autre de pas plus de ± 25 %, chaque fois à l'égard de la valeur moyenne par cycle de test - à la fin de chaque étape de mouillage au moins une teneur en eau de 350 g/m² ou plus et présente d'autre part, dans le même cycle de test à la fin de chaque étape de séchage, une teneur en eau de pas plus de 200 g/m², dans lequel on dépose, dans la procédure de test utilisée pour chaque cycle de test, sur un matériau isolant hydrophobe, un mortier d'adhérence avec une couche de tissu et ensuite un enduit de finition, les panneaux d'éprouvette ainsi obtenus sont colmatés dans la région du bord avec un matériau hydrophobe, sont stabilisés avant le début du premier cycle de mesure sous l'atmosphère de mesure, c'est-à-dire à 20°C / 65 % d'humidité atmosphérique relative et sont introduits dans une étape de mouillage chaque fois dans l'eau à 20°C avec la couche d'enduit de finition vers le bas, ce qui simule un mouillage maximal, ils y restent pendant 6 heures et ils sont ensuite séchés dans une étape de séchage pendant 18 heures sur un rayonnage à grille dans une chambre climatique à 20°C / 65 % d'humidité atmosphérique relative, ce processus de 6 plus 18 heures est répété quatre fois et les panneaux sont alors séchés pendant 72 heures, ce qui signifie la fin du cycle de test, et avant chaque pesée l'eau de surface est épongée et, par série de mesure, on effectue un ou plusieurs de ces cycles de test au moins jusqu'à l'obtention d'une constance de cycle approximative comme elle a été définie plus haut, et ensuite la détermination de la teneur en eau.

2. Utilisation d'un mélange minéral selon la revendication 1, **caractérisée en ce qu'**à la fin de chaque étape de mouillage, on a trouvé au moins une teneur en eau de pas plus de 650 g/m².

3. Utilisation d'un mélange minéral selon la revendication 1 ou la revendication 2, **caractérisée en ce qu'**il contient, en plus des ingrédients précités, un ou plusieurs autre(s) additif(s) choisi(s) parmi des agents aérateurs et des stabilisateurs.

4. Utilisation d'un mélange minéral selon la revendication 1 ou 2, **caractérisée en ce qu'**il est prévu comme liant minéral ou comme liants minéraux la chaux vive, le silicate de calcium, le clinker, le gypse sous forme d'anhydrite, le bihydrate α ou β, le ciment à la magnésie, le ciment à l'oxychlorure de magnésium, le silicate de sodium, le ciment alumineux, le ciment au phosphate, les aluminosilicates de sodium, les cendres volantes, le ciment Portland, divers ciments de combustibles, le ciment au sulfoaluminate de calcium, le ciment de bélite ou l'hydroxyde de calcium ou des mélanges de deux de ceux-là ou plus.

5. Utilisation d'un mélange minéral selon l'une quelconque des revendications 1 à 3, **caractérisée en ce qu'**il est prévu comme liant minéral du ciment blanc ou du ciment blanc et/ou de l'hydroxyde de calcium.

6. Utilisation d'un mélange minéral selon l'une quelconque des revendications 1 à 5, **caractérisée en ce que** le liant minéral ou les liants minéraux présente(nt) par rapport au mortier sec total une proportion pondérale au total de 1 à 50 % en poids, en particulier de 10 à 40 % en poids, par exemple de 15 à 35 % en poids.

7. Utilisation d'un mélange minéral selon l'une quelconque des revendications 1 à 6, **caractérisée en ce qu'**il est prévu comme granulats minéraux de la poudre de roche, du sable, des gravillons ou de la pierre à chaux broyée ou des mélanges de deux de ceux-là ou plus.

8. Utilisation d'un mélange minéral selon l'une quelconque des revendications 1 à 7, **caractérisée en ce qu'**il est prévu comme granulats minéraux de la pierre à chaux broyée.

9. Utilisation d'un mélange minéral selon l'une quelconque des revendications 1 à 8, **caractérisée en ce que** la granulométrie des granulats minéraux se situe à 5 mm ou moins, en particulier jusqu'à 4 mm.

10. Utilisation d'un mélange minéral selon l'une quelconque des revendications 1 à 9, **caractérisée en ce que** la proportion des granulats minéraux, rapportée au mélange sec total, vaut de 20 à 95 % en poids, de préférence de 50 à 90 % en poids, par exemple de 60 à 85 % en poids.

11. Utilisation d'un mélange minéral selon l'une quelconque des revendications 1 à 10, **caractérisée en ce qu'**il est prévu comme agent(s) d'imperméabilisation non résistant(s) aux UV des molécules amphiphiles, qui contiennent au moins une liaison non saturée, comme des sels d'au moins un acide gras C10-C30 avec une ou deux liaison(s) double(s) ou l'acide lui-même, par exemple l'acide palmitoléique, l'acide vaccénique, l'acide eicosanoïque, l'acide cétoléique ou en particulier l'acide oléique; en particulier leurs sels alcalino-terreux, alcalins, d'aluminium ou de zinc, comme l'oléate de sodium, qui peut se transformer in situ en un sel de calcium correspondant.

12. Utilisation d'un mélange minéral selon la revendication 11, **caractérisée en ce que** la proportion d'agent d'imperméabilisation non résistant aux UV se situe de 0,001 à 1 % en poids, par exemple dans la plage de 0,02 à 0,5 % en poids, par exemple dans la plage de 0,05 à 0,15 % en poids.

13. Utilisation d'un mélange minéral selon l'une quelconque des revendications 1 à 12, **caractérisée en ce qu'**il est prévu comme agent(s) d'imperméabilisation résistant(s) aux UV des molécules amphiphiles, qui contiennent au moins un acide gras saturé non ramifié C10-C30, comme des acides libres choisis parmi l'acide laurique, l'acide myristique, l'acide pentadécanoïque, l'acide palmitique, l'acide margarique, l'acide nonadécanoïque, l'acide arachidonique, l'acide béhénique, l'acide lignocérique, l'acide cérotinique, l'acide montanique, l'acide mélissinique ou, en particulier, l'acide stéarique; en particulier leurs sels alcalino-terreux, alcalins, d'aluminium ou de zinc, comme le stéarate de calcium, le stéarate de magnésium ou le stéarate de zinc; ou en outre des résines de silicone résistantes aux UV, par exemple un alkyle hautement dispersé, comme le silsesquioxane de méthyle ou le polydiméthylsiloxane.

14. Utilisation d'un mélange minéral selon l'une quelconque des revendications 1 à 13, **caractérisée en ce que** la proportion d'agent d'imperméabilisation résistant aux UV se situe de 0,001 à 1 % en poids, par exemple dans la plage de 0,02 à 0,5% en poids, par exemple dans la plage de 0,03 à 0,13 % en poids.

15. Utilisation d'un mélange minéral selon l'une quelconque des revendications 1 à 14, **caractérisée en ce qu'**un ou plusieurs agent(s) aérateur(s) est/sont contenu(s) comme autre(s) additif(s), par exemple en une proportion de 0,0001 à 0,2, en particulier par exemple de 0,001 à 0,1 % en poids.

16. Utilisation d'un mélange minéral selon l'une quelconque des revendications 1 à 15, **caractérisée en ce qu'**un ou plusieurs stabilisateur(s) est/sont contenu(s) comme autre(s) additif(s), en particulier ceux à base d'alkylcellulose, comme la méthylcellulose.

17. Utilisation d'un mélange minéral selon la revendication 16, **caractérisée en ce que** la proportion du ou des stabilisateur(s) se situe de 0,005 à 0,25, de préférence de 0,05 à 0,15 % en poids.

18. Utilisation d'un mélange minéral selon l'une quelconque des revendications 1 à 17, **caractérisée en ce qu'**il contient un ou plusieurs autre(s) additif(s), comme par exemple des pigments, des colorants, des fluidifiants, comme des agents mouillants, des fibres par exemple en matières synthétiques ou en verre, une poudre de dispersion, des accélérateurs de prise, des retardateurs de prise, des liants organo-siliciques comme des silicones ou des silanes, des additifs favorisant l'adhérence, des agents thixotropiques, des antioxydants, des résines synthétiques, des adjuvants de mise en œuvre ou des additifs procurant de l'élasticité.

19. Utilisation d'un mélange minéral selon la revendication 18, **caractérisée en ce que** le ou les autre(s) additif(s) représente(nt) au total 0,001 à 20 % en poids, par exemple 0,005 à 10 % en poids du mélange minéral.

20. Utilisation d'un mélange minéral selon l'une quelconque des revendications 1 à 19, **caractérisée en ce qu'**il contient du sulfure de zinc comme autre additif.
